(19) Europäisches Patentamt
European Patent Office
Office européen des brevets

(11) **EP 3 674 013 A1**

(12) **EUROPEAN PATENT APPLICATION**
published in accordance with Art. 153(4) EPC

(43) Date of publication:
**01.07.2020 Bulletin 2020/27**

(51) Int Cl.:
**B22D 11/16** (2006.01)    **B22D 11/12** (2006.01)

(21) Application number: **18918454.2**

(86) International application number:
**PCT/CN2018/092650**

(22) Date of filing: **25.06.2018**

(87) International publication number:
**WO 2019/218425 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2018 CN 201810472732**

(71) Applicant: **Jiangyin Xing Cheng Special Steel Works Co., Ltd**
**Jiangyin**
**Jiangsu 214434 (CN)**

(72) Inventors:
• **LIU, Jigang**
  **Jiangyin, Jiangsu 214434 (CN)**
• **CHEN, Yuhui**
  **Jiangyin, Jiangsu 214434 (CN)**
• **XU, Guoqing**
  **Jiangyin, Jiangsu 214434 (CN)**
• **SONG, Yancheng**
  **Jiangyin, Jiangsu 214434 (CN)**
• **ZHANG, Weiwei**
  **Jiangyin, Jiangsu 214434 (CN)**
• **LI, Zhongping**
  **Jiangyin, Jiangsu 214434 (CN)**

(74) Representative: **Huang, Liwei**
  **Cäcilienstraße 12**
  **40597 Düsseldorf (DE)**

(54) **ONLINE SYSTEM FOR MEASURING THICKNESS OF AND ADJUSTING ROLLING REDUCTION AMOUNT OF CONTINUOUS CASTING SLAB**

(57)    The present application relates to a system for on-line measuring the thickness of a continuous casting billet and adjusting a rolling reduction amount, characterized by: comprising an on-line distance measurement apparatus for continuous casting billet, a system for feeding back casting billet thickness and a system for adjusting rolling reduction in continuous casting machine, wherein the on-line distance measurement apparatus for continuous casting billet, which is fixed above a billet-drawing section of a continuous casting machine, measures the distance from a source point to each specified point of a billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The system of the present invention is capable of giving an accurate, constant and rapid feedback on the thickness of the billet in the continuous casting process online, avoiding the deviation of the rolling reduction amount of the billet in the continuous casting production process which is triggered by the factors such as the capacity of the continuous casting equipment, the execution deviation of the rolling reduction process, the metal solidification attribute (non-preset expansion and contraction), so as to maximize the function of the continuous casting rolling reduction and improve the solidification quality of the billet.

Figure 1

**Description**

**Technical Field**

The present application relates to a system for on-line measuring the thickness of a continuous casting billet and adjusting a rolling reduction amount. The invention belongs to an apparatus for controlling continuous casting in the metallurgical industry.

**Background Art**

The continuous casting production in the metal smelting industry is a process in which the metal solidifies from the liquid state to the solid state with preset size and specification through a continuous casting machine. The billet rolling reduction in the continuous casting process is one of the effective technologies to reduce the internal defects of billet, and the existing reduction system is usually set and controlled in line with the preset reduction program. But the billet may be not solidified exactly as the preset or recognized rules in the continuous casting production, under the influence of factors including equipment capacity, execution deviation, metal solidification property (non-preset expansion and contraction) and so on, so when the rolling reduction adjustment is preset by the system, the preset target of the rolling reduction amount might not be reached, and whatever rolling reduction amount is too large or too small has a great effect on the solidification quality of the billet.

**Disclosure of Invention**

The technical problems to be solved by the present application is to aim at the above-mentioned prior arts and to provide a system for on-line measuring the thickness of a continuous casting billet and adjusting a rolling reduction amount, to achieve the target of the rolling reduction amount according to a preset reduction control, lest the rolling reduction amount is too large or too small, so as to improve the solidification quality of the billet.

The technical scheme adopted by the invention to solve the above problems is as follows: a system for on-line measuring the thickness of a continuous casting billet and adjusting a rolling reduction amount, characterized by: comprising an on-line distance measurement apparatus for continuous casting billet, a system for feeding back casting billet thickness and a continuous casting machine rolling reduction adjustment system, wherein the on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount.

Preferably, the system for feeding back casting billet thickness calculates the thickness of a continuous casting billet by subtracting the linear distance of the near-end point from the linear distance of far-end point, wherein the on-line distance measurement apparatus for continuous casting billet is used to measure the linear distance of the near-end point between a source point and a measuring point of a casting billet for continuous casting billet, and the preset linear distance of far-end point is between a source point and a measuring point of a casting billet; and then revises the thickness based on the measurement angle of the on-line distance measurement apparatus for continuous casting billet, and feeds the thickness date back to a computer-controlled secondary system of the continuous casting machine rolling reduction.

Preferably, the on-line distance measurement apparatus for continuous casting billet has one or more optical, acoustic or electromagnetic transmitting and receiving devices, with its distance measuring accuracy no more than 100 $\mu$m and its distance measuring error no more than 100 $\mu$m.

Preferably, the models of the continuous casting machines applied by the adjustment system include vertical, straight-curve, curved and horizontal continuous casting machines, and the applied billets include plate slab, square billet, rectangular billet, round billet and tube billet.

Preferably, the on-line distance measurement apparatus for continuous casting billet is fixed on any point which is in the visible area of the measurement point for the billet thickness above a billet-drawing section, to guarantee the measurement accuracy and keep a safe distance from the continuous casting billet; the on-line distance measurement apparatus for continuous casting billet rotates along the fixing point in three dimensions to ensure that its measurement work can cover the designated measurement area.

Preferably, the thickness of the plate slab, square billet or rectangular billet, which is continuously casted by a the straight-curve or curved continuous casting machine, is calculated according to the following formula:

$$L_{si} = (L_{i2} - L_{i1}) \cdot \cos\theta_x \cdot \sin\theta_i / \sin\theta_y$$

where: Lsi- refers to the billet thickness of the measuring point i, mm; Li2- the distance between the point of the measurement apparatus and the intersection where a line connecting the point of the measurement apparatus with the measuring point i meets the outer arc surface of the billet, and the value of Li2- is preset in the measurement system, mm; Li1- the distance from the point of the distance measurement apparatus to the measuring point i, mm; $\theta x$- the angle between the line from the point of the distance measurement apparatus to the measuring point i and the vertical plane passing though the distance measurement apparatus and is perpendicular to the billet, °; $\theta i$- the angle between the vertical line passing through the point of the distance measurement apparatus and the line connecting the point of distance measurement apparatus with the measuring point on the billet, °; $\theta y$- the angle between the vertical line passing through the point of the distance measurement apparatus and the plane which covers the measuring point and a line connecting the circle centers of the arcs of the billet, °.

Preferably, the thickness of round billet or tube billet, continuously casted by the straight-curve or curved continuous casting machine, is calculated according to the following formula:

$$L_{si} = (L_{i2} - L_{i1}) \cdot \sin\theta_i / \sin\theta_y$$

where: Lsi- refers to the billet thickness of the measuring point i, mm; Li2- the distance between the point of the measurement apparatus and the intersection where a line connecting the point of the measurement apparatus with the measuring point i meets the outer arc surface of the round billet, and the value of Li2- is preset in the measurement system, mm; Li1- the distance from the point of the distance measurement apparatus to the measuring point i, mm; $\theta i$- the angle between the vertical line passing through the point of the distance measurement apparatus and the line linking the point of distance measurement apparatus to the measuring point i on the billet, °. ; $\theta y$- the angle between the vertical line passing through the point of the distance measurement apparatus and the line linking the measuring point to the circle center of the arc of the billet, °.

Preferably, the thickness of the plate slab, square billet or rectangular billet, continuously casted by the vertical continuous casting machine, is calculated according to the following formula:

$$L_{si} = (L_{i3} - L_{i1}) \cdot \cos\theta_{x1} \cdot \cos\theta_{y1}$$

where: Lsi- refers to the billet thickness of the measuring point i, mm; Li3- the distance between the point of the measurement apparatus and the intersection where a line connecting the point of the measurement apparatus with the measuring point i meets the far side of the billet, and $L_{i3}$ is preset in the measurement system, mm; Li1- the distance from the point of the distance measurement apparatus to the measuring point i, mm; $\theta x1$- the angle between the vertical plane and the line from the point of the distance measurement apparatus to the measuring point i, °; $\theta y1$- the angle between the horizontal plane and the line from the point of the distance measurement apparatus to the measuring point i, °.

Preferably, the thickness of round billet or tube billet, continuously casted by the vertical continuous casting machine, is calculated according to the following formula:

$$L_{si} = (L_{i3} - L_{i1}) \cdot \cos\theta_{y2}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and the value is preset in the measurement system, mm; $L_{i1}$- the distance from the point of the distance measurement apparatus to the measuring point i, mm; $\theta_{y2}$- the angle between the horizontal plane and the line from the point of the distance measurement apparatus to the measuring point i, °.

Preferably, the thickness of the plate slab, square billet or rectangular billet, continuously casted by the horizontal continuous casting machine, is calculated according to the following formula:

$$L_{si} = (L_{i3} - L_{i1}) \cdot \cos\theta_{x2} \cdot \cos\theta_{y2}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$ is preset in the measurement system, mm; $L_{i1}$- the distance from the point of the distance measurement apparatus to the measuring point i, mm; $\theta_{x2}$- the angle between the line from the point of the distance measurement apparatus to the measuring point i and the plane passing through the transverse center line of the billet and perpendicular to the billet, ° ; $\theta_{y2}$-the angle between the line from the point of the distance measurement apparatus to the measuring point i and the horizontal plane, °.

Preferably, the thickness of round billet or tube billet, continuously casted by the horizontal continuous casting machine, is calculated according to the following formula:

$$L_{si} = (L_{i3} - L_{i1}) \bullet \cos \theta_{y2}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$ is preset in the measurement system, mm; $L_{i1}$- the distance from the point of the distance measurement apparatus to the measuring point i, mm; $\theta_{y2}$- the angle between the line from the point of the distance measurement apparatus to the measuring point i and the transversal surface of the billet passing through the measuring point i, °.

Preferably, protection measures shall be adopted to protect the on-line distance measurement apparatus for continuous casting billet from dust, high and low temperature and humidity according to the actual working environment.

Preferably, the continuous casting machine rolling reduction adjustment system is using an existing continuous casting rolling reduction system, and in the system the secondary system controlled by a computer of the continuous casting machine rolling reduction sends the data of rolling reduction roller distance and pressure setting to the computer-controlled first-level system of the continuous casting machine rolling reduction according to the rolling reduction model program, and the process is executed by the rolling reduction apparatus.

Compared with the prior art, the invention has the advantages as follows:

The system of the present invention is capable of giving an accurate, constant and rapid feedback on the thickness of a billet in the continuous casting process online, avoiding the deviation of the rolling reduction amount of the billet in the continuous casting production process which is triggered by the factors such as the capacity of the continuous casting equipment, the execution deviation of the rolling reduction process, the metal solidification attribute (non-preset expansion and contraction), so as to maximize the function of the continuous casting rolling reduction and improve the solidification quality of the billet. An on-line distance measurement apparatus for continuous casting billet, a system for feeding back casting billet thickness and a continuous casting machine rolling reduction adjustment system constitutes the system for on-line measuring the thickness of a continuous casting billet and adjusting a rolling reduction amount. The system for on-line measuring the thickness of a continuous casting billet and adjusting a rolling reduction amount is applied to quickly feedback the thickness of a continuous casting billet, and real-time verification is carried out for the reduction effect of the continuous casting billet, so as to reduce the probability of the non-execution of the rolling reduction amount as planned and the quality reduction of the continuous casting billet under the influence of the system control and the continuous casting machine.

## Brief Description of Figures in the Drawings

Figure 1 The structural diagram of plate slab and rectangular billet continuously casted by a straight-curve or curved continuous casting machine in embodiment 1 and embodiment 2 of the invention;
Figure 2 The left side view of Figure 1;
Figure 3 The top view of Figure 1;
Figure 4 The structural diagram of round billet and tube billet continuously casted by a straight-curve or curved continuous casting machine in embodiment 3 and embodiment 4 of the invention;
Figure 5 The left view of Figure 4;
Figure 6 The top view of Figure 4;
Figure 7 The structural diagram of plate slab and rectangular billet continuously casted by vertical continuous casting machine in embodiment 5 and embodiment 6 of the invention;
Figure 8 The left view of Figure 7;
Figure 9 The top view of Figure 7;
Figure 10 The structural diagram of round billet and tube billet continuously casted by a vertical continuous casting machine in embodiment 7 and embodiment 8 of the invention;
Figure 11 The left view of Figure 10;

Figure 12 The structural diagram of plate slab and rectangular billet continuously casted by a horizontal continuous casting machine in embodiment 9 and embodiment 10 of the invention;
Figure 13 The left view of Figure 12;
Figure 14 The top view of Figure 12;
Figure 15 The structural diagram of round billet and tube billet measured on a horizontal continuous casting machine in embodiment 11 and embodiment 12 of the invention;
Figure 16 The left view of Figure 15.

Mode(s) **for Carrying Out the Invention**

The invention will be further described in detail below with the disclosing of the embodiments.

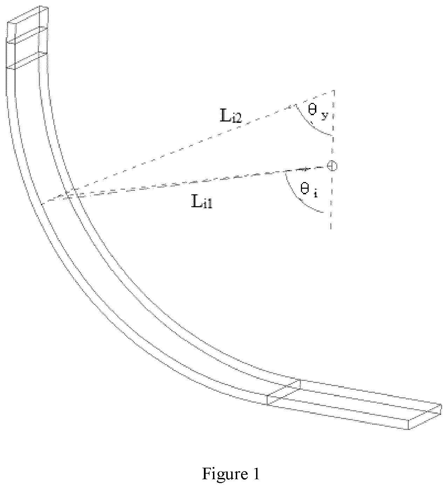

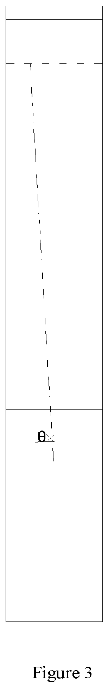

Embodiment 1: as shown in the structural diagram of the device (Figure 1-3), the system for on-line measuring the thickness of a continuous casting billet and adjusting a rolling reduction amount in the embodiment consists of an on-line infrared distance measurement apparatus for continuous casting billet, a system for feeding back casting billet thickness and a continuous casting machine rolling reduction adjustment system. The system has the distance measuring accuracy of 100 $\mu$m and the distance measuring error no more than 100 $\mu$m; the distance measuring probe is fixed on the center surface of the width direction and also the center of the inner arc of the arc section of a straight-curve or curved continuous casting machine; the on-line distance measurement apparatus for continuous casting billet rotates along the fixing point in three dimensions to ensure that its measurement work can cover the designated measurement area; methods are taken to protect the probe from dust, high and low temperature and humidity.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of the continuous casting billet.

$$\text{Lsi} = (\text{Li}2 - \text{Li}1) \cdot \cos\theta x \cdot \sin\theta i / \sin\theta y$$

where: $L_{si}$- refers to the billet thickness of the measuring point i, mm; $L_{i2}$- the distance between the point of the measurement apparatus and the intersection where a line connecting the point of the measurement apparatus with the measuring point i meets the outer arc surface of the billet, and the value of $L_{i2}$- is preset in the measurement system, mm; $L_{i1}$- the distance from the point of the distance measurement apparatus to the measuring point i, mm; $\theta_x$- the angle between the line from the point of the distance measurement apparatus to the measuring point i and the vertical plane passing though the distance measurement apparatus and is perpendicular to the billet, °; $\theta_i$- the angle between the vertical line passing through the point of the distance measurement apparatus and the connecting line between the point of distance measurement apparatus and the measuring point on the billet, ° ; $\theta_y$- the angle between the vertical line passing through the point of the distance measurement apparatus and the plane which covers the measuring point and a line connecting the circle centers of the arcs of the billet, °.

Embodiment 2: as shown in the structural diagram of the device (Figure 1-3), the online system for measuring the thickness of and adjusting a rolling reduction amount of a continuous casting rectangular billet comprises two on-line acoustic distance measuring probes for continuous casting billet, a system for feeding back casting billet thickness and a continuous casting machine rolling reduction adjustment system. The distance measuring accuracy is 100 $\mu$m and the distance measuring error is no more than 100 $\mu$m; one of the probes is fixed on the non-central surface of the width direction and also 2 m below the center of the inner arc of the arc section of a straight-curve or curved continuous casting machine, and the other one is fixed on the non-central surface of the width direction and also 3 m above the center of the inner arc of the arc section of a straight-curve or curved continuous casting machine. The on-line distance measurement apparatus for continuous casting billet rotates along the fixing point in three dimensions to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet. More details about embodiment 2 are in the same way as embodiment 1.

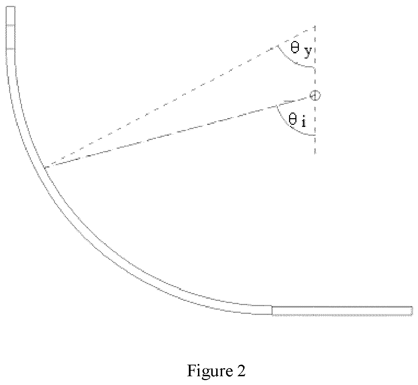

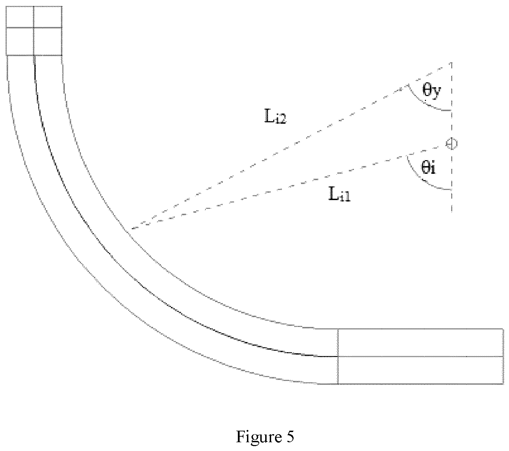

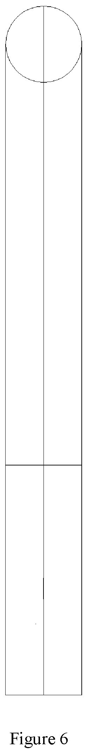

Embodiment 3: as shown in the structural diagram of the device (Figure 2-6), the online system for measuring the diameter of and adjusting a rolling reduction amount of a continuous casting round billet comprises an on-line electromagnetic distance measuring probe for continuous casting billet, a system for feeding back casting billet thickness and a continuous casting machine rolling reduction adjustment system. The online system has the distance measuring accuracy of 100 $\mu$m and the distance measuring error no more than 100 $\mu$m; the distance measurement is fixed on a vertical plane containing the line of the circle centers of the round billet in the straight-curve or curved continuous casting machine, and at the circle center of the inner arc of the arc section; the on-line distance measurement apparatus rotates along the fixing point in the plane of the circle centers, to ensure that its measurement work can cover the designated measurement area; methods are taken to protect the probe from dust, high and low temperature and humidity.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of a continuous casting billet.

$$L_{si} = (L_{i2} - L_{i1}) \cdot \sin\theta_i / \sin\theta_y$$

where: $L_{si}$- refers to the billet thickness of the measuring point i, mm; $L_{i2}$- the distance between the point of the measurement apparatus and the intersection where a line connecting the point of the measurement apparatus with the measuring point i meets the outer arc surface of the billet, and the value of $L_{i2}$- is preset in the measurement system, mm; $L_{i1}$- the distance from the point of the distance measurement apparatus to the measuring point i, mm; $\theta_i$- the angle between the vertical line passing through the point of the distance measurement apparatus and the line connecting the point of distance measurement apparatus with the measuring point on the billet, ° ; $\theta_y$- the angle between the vertical line passing through the point of the distance measurement apparatus and a line connecting the measuring point with the circle center of the arc of the billet, °.

More details about embodiment 3 are in the same way as embodiment 1.

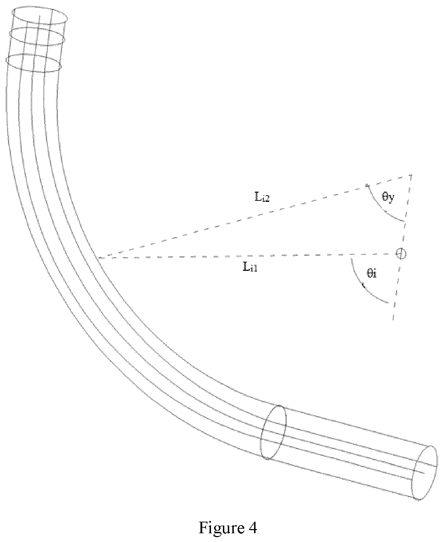

Embodiment 4: as shown in the structural diagram of the device (Figure 4-6), the online system for measuring the outer diameter of and adjusting a rolling reduction amount of a continuous casting tube billet includes an on-line infrared distance measuring probe for continuous casting billet, a system for feeding back casting billet thickness and a continuous casting machine rolling reduction adjustment system. The online system has the distance measuring accuracy of 100 $\mu$m and the distance measuring error no more than 100 $\mu$m; the distance measurement is fixed on the circle center of the billet in the straight-curve or curved continuous casting machine, and at the circle center of the inner arc of the arc section; the on-line distance measurement apparatus for continuous casting billet rotates along the fixing point in three dimensions to ensure that its measurement work can cover the designated measurement area; methods are taken to protect the probe from dust, high and low temperature and humidity.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

More details about embodiment 4 are in the same way as embodiment 3.

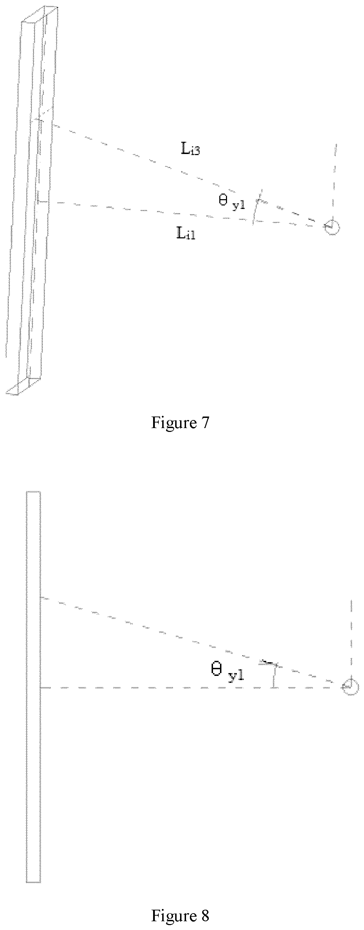

Embodiment 5: as shown in the structural diagram of the device (Figure 7-9), The system for on-line measuring the thickness of a continuous casting billet and adjusting a rolling reduction amount includes an on-line infrared distance measuring probe for continuous casting billet, a system for feeding back casting billet thickness and a continuous casting machine rolling reduction adjustment system. The online system has the distance measuring accuracy of 100 $\mu$m and the distance measuring error no more than 100 $\mu$m; the probe is fixed on the central surface of the width direction of a vertical continuous casting machine, and is 5 m below a mould outlet and at a horizontal distance of 8 m from the mould outlet; the on-line distance measurement apparatus rotates along the fixing point in three dimensions to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

$$Lsi = (Li3-Li1) \cdot \cos \theta \, x1 \cdot \cos \theta \, y1$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and the value of $L_{i3}$- is preset in the measurement system, mm; $L_{i1}$- the distance from the point of the distance measurement apparatus to the measuring point i, mm; $\theta_{x1}$- the angle between the vertical plane and the line from the point of the distance measurement apparatus to the measuring point i, °; $\theta_{y1}$- the angle between the horizontal plane and the line from the point of the distance measurement apparatus to the measuring point i, °.

More details about embodiment 5 are in the same way as embodiment 1.

Embodiment 6: as shown in the structural diagram of the device (Figure 7-9), the online system for measuring the thickness of and adjusting a rolling reduction amount of a continuous casting rectangular billet includes an on-line infrared distance measuring probe for continuous rectangular billet, a system for feeding back casting billet thickness and a continuous casting machine rolling reduction adjustment system. The online system has the distance measuring accuracy of 100 $\mu$m and the distance measuring error no more than 100 $\mu$m; the probe is fixed on the central surface of the width direction of a vertical continuous casting machine, and is 3 m below a mould outlet and at a horizontal distance of 9 m from the mould outlet; the on-line distance measurement apparatus for continuous casting billet rotates along the fixing point in three dimensions to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

More details about embodiment 6 are in the same way as embodiment 1.

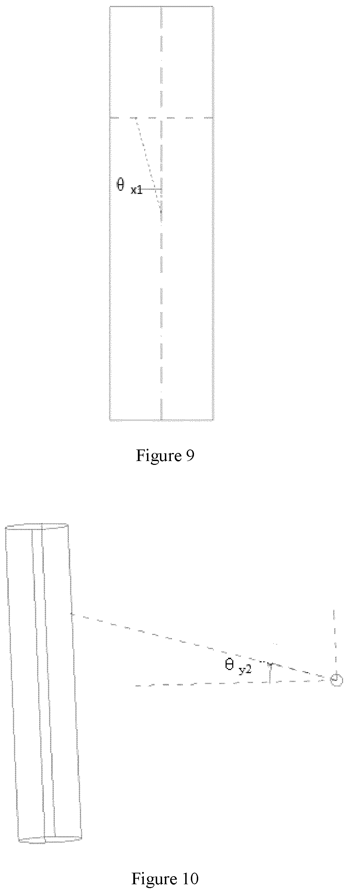

Embodiment 7: as shown in the structural diagram of the device (Figure 10-11), the online system for measuring the diameter of and adjusting a rolling reduction amount of a continuous casting round billet includes an on-line infrared distance measuring probe for continuous rectangular billet, a system for feeding back casting billet thickness and a continuous casting machine rolling reduction adjustment system. The online system has the distance measuring accuracy of 100 $\mu$m and the distance measuring error no more than 100 $\mu$m; the probe is fixed on the plane which covers the line of the circle centers of billet and the line of the circle centers 1 when the billet is cut and toppled, in the vertical continuous casting machine, and is 6 m below a mould outlet and at a horizontal distance of 9 m from the mould outlet; the on-line distance measurement apparatus for continuous casting billet rotates along the fixing point in the plane mentioned above to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

$$Lsi = (Li3 - Li1) \cdot \cos \theta \, y2$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and the value of $L_{i3}$- is preset in the measurement system, mm; $L_{i1}$- the distance from the point of the distance measurement apparatus to the measuring point i, mm; $\theta_{y2}$- the angle between the horizontal plane and the line from the point of the distance measurement apparatus to the measuring point i and, °.

More details about embodiment 7 are in the same way as embodiment 1.

Embodiment 8: as shown in the structural diagram of the device (Figure 10-11), the online system for measuring the diameter of and adjusting a rolling reduction amount of a continuous casting tube billet includes an on-line infrared distance measuring probe for continuous rectangular billet, a system for feeding back casting billet thickness and a continuous casting machine rolling reduction adjustment system. The online system has the distance measuring accuracy of 100 μm and the distance measuring error no more than 100 μm; the probe is fixed on the plane which contains the line of the circle centers of billet and the line of the circle centers when the billet is cut and toppled, in the vertical continuous casting machine, and is 5 m below a mould outlet and at a horizontal distance of 10 m from the mould outlet; the on-line distance measurement apparatus for continuous casting billet rotates along the fixing point in the plane mentioned above to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

More details about embodiment 8 are in the same way as embodiment 7.

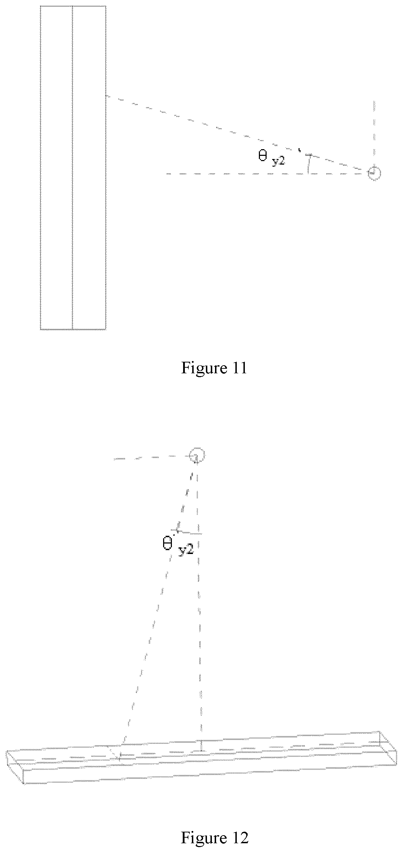

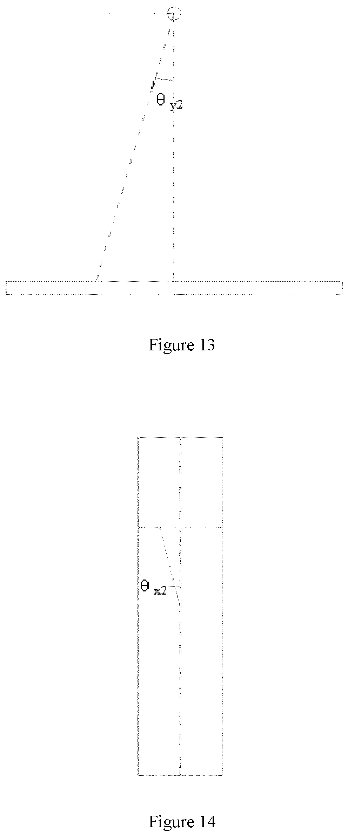

Embodiment 9: as shown in the structural diagram of the device (Figure 12-14), The system for on-line measuring the thickness of a continuous casting billet and adjusting a rolling reduction amount includes an on-line infrared distance measuring probe for continuous rectangular billet, a system for feeding back casting billet thickness and a continuous casting machine rolling reduction adjustment system. The online system has the distance measuring accuracy of 100 μm and the distance measuring error no more than 100 μm; the probe is fixed on the central plane of the width direction of the horizontal continuous casting machine, and is 7 m behind the mould outlet along the casting direction and at a vertical relative height of 8m from the upper surface of the billet; the on-line distance measurement apparatus for continuous casting billet rotates along the fixing point in three dimensions to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

$$Lsi = (Li3 - Li1) \cdot \cos \theta \, x2 \cdot \cos \theta \, y2$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$- is preset in the measurement system, mm; $L_{i1}$- the distance from the point of the distance measurement apparatus to the measuring point i, mm; $\theta_{x2}$- the angle between the line from the point of the distance measurement apparatus to the measuring point i and the plane passing through the transverse center line of the billet and perpendicular to the billet, ° ; $\theta_{y2}$- the angle between the horizontal plane and the line from the point of the distance measurement apparatus to the measuring point i, °.

More details about embodiment 9 are in the same way as embodiment 1.

Embodiment 10: as shown in the structural diagram of the device (Figure 12-14), the online system for measuring the thickness of and adjusting a rolling reduction amount of a continuous rectangular billet includes an on-line infrared distance measuring probe for continuous rectangular billet, a system for feeding back casting billet thickness and a continuous casting machine rolling reduction adjustment system. The online system has the distance measuring accuracy of 100 μm and the distance measuring error no more than 100 μm; the probe is fixed on the central plane of the width direction of the horizontal continuous casting machine, and is 6 m behind the mould outlet along the casting direction and at a vertical relative height of 9 m from the upper surface of the billet; the on-line distance measurement apparatus for continuous casting billet rotates along the fixing point in three dimensions to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

More details about embodiment 10 are in the same way as embodiment 9.

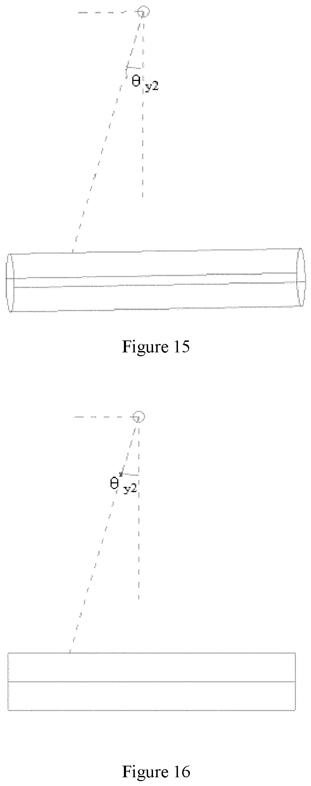

Embodiment 11: as shown in the structural diagram of the device (Figure 15-16), the online system for measuring the thickness of and adjusting a rolling reduction amount of a continuous round billet includes an on-line infrared distance measuring probe for continuous casting billet, a system for feeding back casting billet thickness and a continuous casting machine rolling reduction adjustment system. The online system has the distance measuring accuracy of 100 μm and the distance measuring error no more than 100 μm; the probe is fixed on the vertical plane passing through the line of the circle centers of billet, in the horizontal continuous casting machine, and is 6 m behind the mould outlet along the casting direction and at a vertical relative height of 9 m from the upper surface of the billet; the on-line distance measurement apparatus for continuous casting billet rotates along the fixing point in the above-mentioned plane to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

$$Lsi = (Li3 - Li1) \cdot \cos \theta \, y2$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$- is preset in the measurement system, mm; $L_{i1}$- the distance from the point of the distance measurement apparatus to the measuring point i, mm; $\theta_{y2}$- the angle between the line from the point of the distance measurement apparatus to the measuring point i and the transversal surface of the billet passing through point i, °.

More details about embodiment 11 are in the same way as embodiment 1.

Embodiment 12: as shown in the structural diagram of the device (Figure 15-16), the online system for measuring the thickness of and adjusting a rolling reduction amount of a continuous tube billet includes an on-line infrared distance measuring probe for continuous casting billet, a system for feeding back casting billet thickness and a continuous casting machine rolling reduction adjustment system. The online system has the distance measuring accuracy of 100 $\mu$m and the distance measuring error no more than 100 $\mu$m; the probe is fixed on the vertical plane passing through the line of the circle centers of billet, in the horizontal continuous casting machine, and is 5 m behind the mould outlet along the casting direction and at a vertical relative height of 7 m from the upper surface of the billet; the on-line distance measurement apparatus for continuous casting billet rotates along the fixing point in the plane mentioned above to ensure that its measurement work can cover the designated measurement area.

The on-line distance measurement apparatus for continuous casting billet, which is fixed above a billet-drawing section of a continuous casting machine, measures the distance from a source point to each specified point of a casting billet at a certain frequency; the system for feeding back casting billet thickness is used to calculate the thickness of the casting billet according to the measured distance, and then feed a result back to a secondary system of a continuous casting system; and an existing dynamic rolling reduction system is used to adjust a rolling reduction amount. The on-line distance measurement apparatus for continuous casting billet and the continuous casting machine rolling reduction adjustment system are utilized to quickly feedback the thickness of continuous casting billet, to verify the rolling reduction effect of continuous casting billet in real time and optimize the reduction effect of continuous casting billet.

More details about embodiment 12 are in the same way as embodiment 11.

In addition to the above, the present invention also includes other embodiments, and any technical scheme formed by equivalent transformation or equivalent replacement shall fall within the scope of protection of the claims of the present invention.

## Claims

1. A system for on-line measuring the thickness of a continuous casting billet and adjusting a rolling reduction amount, **characterized by**: comprising an on-line distance measurement apparatus for continuous casting billet, a system for feeding back casting billet thickness and a system for adjusting rolling reduction in continuous casting machine, wherein the on-line distance measurement apparatus for continuous casting billet, which is fixed above a billet-drawing section of a continuous casting machine, measures a distance from a source point to each specified point of a casting billet at a certain frequency; the system for feeding back casting billet thickness is used to calculate the thickness of the casting billet according to the measured distance, and then feed a result back to a secondary system of a continuous casting system; and an existing system for adjusting rolling reduction in continuous casting machine is used to adjust a rolling reduction amount.

2. The system for on-line measuring the thickness of a continuous casting billet and adjusting a rolling reduction amount according to claim 1, wherein: the system for feeding back casting billet thickness subtracts a near-end linear distance between a source point and a measuring point of a casting billet, wherein the near-end linear distance is obtained by the on-line distance measurement apparatus for continuous casting billet, from a preset far-end linear distance between a source point and a measuring point of a casting billet, and revises the thickness of the casting billet on basis of the measuring angle of the measurement apparatus, and transmits the thickness data to a secondary system controlled by a computer of continuous casting rolling reduction.

3. The system for on-line measuring the thickness of a continuous casting billet and adjusting a rolling reduction amount according to claim 1, wherein the on-line distance measurement apparatus for continuous casting billet is using one or more optical, acoustic or electromagnetic transmitting and receiving devices, wherein its distance measurement accuracy no more than 100 $\mu$m and its distance measurement error no more than 100 $\mu$M.

4. The system for on-line measuring the thickness of a continuous casting billet and adjusting a rolling reduction amount according to claim 1, wherein: the models of the continuous casting machines applicable to the adjustment system include vertical continuous casting machine, straight-curve continuous casting machine, curved continuous casting machine and horizontal continuous casting machine, and the applicable billets include plate slab, square billet, rectangular billet, round billet, tube billet.

5. The system for on-line measuring the thickness of a continuous casting billet and adjusting a rolling reduction amount according to claim 1, wherein: the on-line distance measurement apparatus for continuous casting billet is fixed on any point which is above a billet-drawing section and within a viewing area of the measuring point for the billet thickness, and which is able to guarantee the measurement accuracy and keep a safe distance from the continuous casting billet; the on-line distance measurement apparatus rotates along the fixing point in three dimensions, to ensure that its measurement work can cover the designated measurement area.

6. The system for on-line measuring the thickness of a continuous casting billet and adjusting a rolling reduction amount according to claim 2, wherein: a plate slab, square billet or rectangular billet is continuously casted by a straight-curve or curved continuous casting machine, and the thickness of the billet is obtained by calculating according to the following formula:

$$L_{si} = (L_{i2} - L_{i1}) \cdot \cos\theta_x \cdot \sin\theta_i / \sin\theta_y$$

where: $L_{si}$- refers to the billet thickness of the measuring point i, mm; $L_{i2}$- the distance between the point of the measurement apparatus and the intersection where a line connecting the point of the measurement apparatus with the measuring point i meets the outer arc surface of the billet, and $L_{i2}$ is a preset value in the measurement system, mm; $L_{i1}$- the distance from the point of the measurement apparatus to the measuring point i, mm; $\theta_x$- the angle between a line connecting the point of the measurement apparatus with the measuring point i and a plane which contains the point of measurement apparatus and is perpendicular to the billet, °; $\theta_i$- the angle between the vertical line passing through the point of the measurement apparatus and a line connecting the point of measurement apparatus with the measuring point on the billet, °; $\theta_y$- the angle between a vertical line passing through the point of the measurement apparatus and a plane which contains the measuring point as well as a line connecting the circle centers of the arcs of the billet, °.

7. The system for on-line measuring the thickness of a continuous casting billet and adjusting a rolling reduction amount according to claim 2, wherein: a round billet or tube billet is continuously casted by a straight-curve or curved continuous casting machine, and the thickness of the billet is obtained by calculating according to the following formula:

$$L_{si} = (L_{i2} - L_{i1}) \cdot \sin\theta_i / \sin\theta_y$$

$L_{si}$- refers to the billet thickness of the measuring point i, mm; $L_{i2}$- the distance between the point of the measurement apparatus and the intersection where a line connecting the point of the measurement apparatus with the measuring point i meets the outer arc surface of the billet, and $L_{i2}$ is a preset value in the measurement system, mm; $L_{i1}$- the distance from the point of the measurement apparatus to the measuring point i, mm; $\theta_i$- the angle between the vertical line passing through the point of the measurement apparatus and a line connecting the point of measurement apparatus with the measuring point i on the billet, °; $\theta_y$- the angle between a vertical line passing through the point of the measurement apparatus and a line linking the measuring point to the circle center of the arc of the billet, °.

8. The system for on-line measuring the thickness of a continuous casting billet and adjusting a rolling reduction amount according to claim 2, wherein: a plate slab, square billet or rectangular billet is continuously casted by a vertical continuous casting machine, and the thickness of the billet is obtained by calculating according to the following formula:

$$L_{si} = (L_{i3} - L_{i1}) \cdot \cos\theta_{x1} \cdot \cos\theta_{y1}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$ is a preset value in the measurement system, mm; $L_{i1}$- the distance from the point of the measurement apparatus to the measuring point i, mm; $\theta_{x1}$- the angle between a vertical plane and a line connecting the point of the measurement apparatus with the measuring point i, °; $\theta_{y1}$- the angle between a horizontal plane and a line connecting the point of the measurement apparatus with the measuring point i, °.

9. The system for on-line measuring the thickness of a continuous casting billet and adjusting a rolling reduction amount according to claim 2, wherein: a round billet or tube billet is continuously casted by a vertical continuous casting machine, and the thickness of the billet is obtained by calculating according to the following formula:

$$L_{si} = (L_{i3} - L_{i1}) \bullet \cos\theta_{y2}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$ is a preset value in the measurement system, mm; $L_{i1}$- the distance from the point of the measurement apparatus to the measuring point i, mm; $\theta_{y2}$- the angle between a horizontal plane and a line connecting the point of the measurement apparatus with the measuring point i, °.

10. The system for on-line measuring the thickness of a continuous casting billet and adjusting a rolling reduction amount according to claim 2, wherein: a plate slab, square billet or rectangular billet is continuously casted by a horizontal continuous casting machine, and the thickness of the billet is obtained by calculating according to the following formula:

$$L_{si} = (L_{i3} - L_{i1}) \bullet \cos\theta_{x2} \bullet \cos\theta_{y2}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$ is a preset value in the measurement system, mm; $L_{i1}$- the distance from the point of the measurement apparatus to the measuring point i, mm; $\theta_{x2}$- the angle between a line connecting the point of the measurement apparatus with the measuring point i and a plane which passes through the transverse centerline of the billet and is perpendicular to the billet ° ; $\theta_{y2}$- the angle between a horizontal plane and a line connecting the point of the measurement apparatus with the measuring point i, °.

11. The system for on-line measuring the thickness of a continuous casting billet and adjusting a rolling reduction amount according to claim 2, wherein: a round billet or tube billet is continuously casted by a horizontal continuous casting machine, and the thickness of the billet is obtained by calculating according to the following formula:

$$L_{si} = (L_{i3} - L_{i1}) \bullet \cos\theta_{y2}$$

where: $L_{si}$- refers to the billet thickness of the measuring point i, mm; $L_{i3}$- the distance between the point of the measurement apparatus and the intersection where a line connecting the point of the measurement apparatus with the measuring point i meets the far side of the billet, and $L_{i3}$ is a preset value in the measurement system, mm; $L_{i1}$- the distance from the point of the measurement apparatus to the measuring point i, mm; $\theta_{y2}$- the angle between a line connecting the point of the measurement apparatus with the measuring point i and a plane of cross section of the billet passing through the point i, °.

12. The system for on-line measuring the thickness of a continuous casting billet and adjusting a rolling reduction amount according to claim 1, wherein: according to actual working environment, protection measure(s) for protecting from dust, high/low temperature, humidity, is(are) added to protect the on-line distance measurement apparatus.

13. The system for on-line measuring the thickness of a continuous casting billet and adjusting a rolling reduction amount according to claim 1, wherein: the system for adjusting rolling reduction in continuous casting machine is using an existing continuous casting rolling reduction system, and a secondary system controlled by a computer of continuous casting rolling reduction sends data to a first system controlled by a computer of continuous casting rolling reduction according to a rolling reduction model program, wherein the data are setting data of pressure and roller distance of rolling reduction, and they are executed by a rolling reduction apparatus.

EP 3 674 013 A1

Figure 1

13

Figure 2

Figure 3

Figure 4

Figure 5

Figure 6

Figure 7

Figure 8

$\theta_{x1}$

Figure 9

$\theta_{y2}$

Figure 10

Figure 11

Figure 12

$\theta_{y2}$

Figure 13

$\theta_{x2}$

Figure 14

Figure 15

Figure 16

| | | |
|---|---|---|
| **INTERNATIONAL SEARCH REPORT** | International application No. | |
| | **PCT/CN2018/092650** | |

**A.    CLASSIFICATION OF SUBJECT MATTER**

B22D 11/16(2006.01)i;   B22D 11/12(2006.01)i

According to International Patent Classification (IPC) or to both national classification and IPC

**B.    FIELDS SEARCHED**

Minimum documentation searched (classification system followed by classification symbols)

B22D

Documentation searched other than minimum documentation to the extent that such documents are included in the fields searched

Electronic data base consulted during the international search (name of data base and, where practicable, search terms used)

CNTXT; CNKI; CNABS; JPABS; VEN; EPTXT; WOTXT; USTXT: 兴澄特种钢, 在线, 测距, 厚度, 调整, 调节, 角度, 距离, 实时, 获取, 连铸, 反馈, 测量, 修正, 铸坯, 压下量, mesur+, detect+, thickness, press+ down, press-down, adjust+, on-line, distance?, correct+

**C.    DOCUMENTS CONSIDERED TO BE RELEVANT**

| Category* | Citation of document, with indication, where appropriate, of the relevant passages | Relevant to claim No. |
|---|---|---|
| Y | CN 104148605 A (WISDRI ENGINEERING & RESEARCH INCORPORATION LIMITED) 19 November 2014 (2014-11-19) description, paragraphs [0003]-[0010] | 1-5, 12, 13 |
| Y | CN 105772655 A (HENGYANG RAMON SCIENCE & TECHNOLOGY CO., LTD.) 20 July 2016 (2016-07-20) description, paragraph [0009] | 1-5, 12, 13 |
| Y | CN 105444676 A (BAOSHAN IRON & STEEL CO., LTD.) 30 March 2016 (2016-03-30) description, paragraphs [0019] and [0020] | 2 |
| A | CN 105108096 A (SHOUGANG GENERAL COMPANY) 02 December 2015 (2015-12-02) entire document | 1-13 |
| A | JP 2000343183 A (NIPPON STEEL CORPORATION) 12 December 2000 (2000-12-12) entire document | 1-13 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2018** | **11 December 2018** |

| Name and mailing address of the ISA/CN | Authorized officer |
|---|---|
| **State Intellectual Property Office of the P. R. China (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/092650**

| Patent document cited in search report | | | Publication date (day/month/year) | Patent family member(s) | | | Publication date (day/month/year) |
|---|---|---|---|---|---|---|---|
| CN | 104148605 | A | 19 November 2014 | CN | 104148605 | B | 20 April 2016 |
| CN | 105772655 | A | 20 July 2016 | None | | | |
| CN | 105444676 | A | 30 March 2016 | CN | 105444676 | B | 06 July 2018 |
| CN | 105108096 | A | 02 December 2015 | CN | 105108096 | B | 30 March 2018 |
| JP | 2000343183 | A | 12 December 2000 | None | | | |

Form PCT/ISA/210 (patent family annex) (January 2015)